# EUROPEAN PATENT APPLICATION

(11) **EP 3 401 705 A1**
(43) Date of publication of application: **14.11.2018**
(21) Application number: 16883828.2
(22) Date of filing: 26.12.2016
(51) Int. Cl.: G01T 1/10, C09K 11/00, C09K 11/55

(54) **DOSIMETER USING MAGNESIUM OXIDE AND RADIATION DOSE MEASURING METHOD**

(30) Priority: 05.01.2016 JP 2016000355
(71) Applicant: Tokuyama Corporation, Shunan-shi, Yamaguchi-ken 745-8648 (JP)
(72) Inventor: YANAGIDA Takayuki, Ikoma-shi Nara 630-0192 (JP); OKADA Go, Ikoma-shi Nara 630-0192 (JP); FUKUDA Kentaro, Shunan-shi Yamaguchi 745-8648 (JP); MATSUO Kentaro, Shunan-shi Yamaguchi 745-8648 (JP); KATO Takumi, Ikoma-shi Nara 630-0192 (JP)
(74) Representative: Dehns
(86) International application number: PCT/JP2016/088623
(87) International publication number: WO 2017/119329

(57) **Abstract**

The object of the present invention is to provide a dosimeter capable of reading out a dose multiple times and excellent in biological tissue equivalence, and a radiation measuring method using this dosimeter. A dosimeter of the present invention comprises a detecting element containing magnesium oxide and a dose measuring system thereof is a radio-photoluminescence system. The detecting element preferably comprises a single-crystal body or a sintered body of magnesium oxide, and more preferably further contains a rare-earth element such as samarium. Moreover, the radiation measuring method of the present invention uses the dosimeter of the present invention and a dose measuring system thereof is a radio-photoluminescence system.

## Description

### Technical Field

The present invention relates to a dosimeter using magnesium oxide and a radiation dose measuring method. In more detail, the present invention relates to a magnesium oxide dosimeter in which a radio-photoluminescence (RPL) system is adopted, and a radiation measuring method using this dosimeter.

### Background Art

A dosimeter for measuring a dose of x-rays or γ-rays records a radiation dose by utilizing a phenomenon in which the electronic state in a detecting element is changed when the detecting element is irradiated with radiation. Examples of a system for reading out and measuring a recorded dose include: a Thermostimulated Luminescence (TSL) system for measuring fluorescence emitted by thermal stimulation; an Optically Stimulated Luminescence (OSL) system for measuring fluorescence emitted by optical stimulation; and a radio-photoluminescence (RPL) system.

As a material of a detecting element (phosphor) constituting a dosimeter for the TSL system, for example, lithium fluoride, lithium borate, beryllium oxide, aluminum nitride, calcium fluoride, calcium sulfate, magnesium borate, magnesium oxide and other materials have been proposed (see for example Patent Documents 1 and 2 and Non-Patent Document 1). Moreover, as a material of a detecting element constituting a dosimeter for the OSL system, aluminum oxide and other materials have been proposed (see Patent Document 3). Furthermore, as a detecting element constituting a dosimeter for the RPL system, phosphate glass containing silver and other materials have been proposed and used for a personal dosimeter or an environmental monitor in a radiation exposure environment (Non-Patent Document 2).

The dosimeter for the conventional TSL system or OSL system reads out a recorded dose through thermal stimulation or optical stimulation, but there has been the problem that a dose cannot be read out repeatedly since the electronic state of a detecting element, which has been stimulated once thermally or optically, returns to the ground state.

Moreover, regarding the phosphate glass-based dosimeter for the RPL system typically used to measure a dose of x-rays or γ-rays, a recorded dose can be read out multiple times, but there has been a problem that the biological tissue equivalence is low because of the heavy atomic weight.

For this reason, a material which can be adopted in the RPL system and has high biological tissue equivalence has been required. However, materials useful as a detecting element for the RPL system have not been thoroughly studied, and findings about what material can be adopted have not been accumulated.

### Prior Art Documents

### Patent Documents

Patent Document 1: JP H05-263075 A
Patent Document 2: JP 2000-206248 A
Patent Document 3: JP 2013-541708 A

### Non-Patent Documents

Non-Patent Document 1: Vakhtang k. et. al., Journal of Material Science and Engineering, A1(2011)872-875
Non-Patent Document 2: David Y. C. et. al., Advances in cancer Therapy, 553-568(2011)

### Summary of the Invention

### Problem to Be Solved by the Invention

In view of the above problems, an object of the present invention is to provide a dosimeter capable of reading out a dose multiple times and excellent in biological tissue equivalence, and a radiation measuring method using this dosimeter.

### Means for Solving the Problem

The present inventors have studied various light-element compounds as a detecting element having high biological tissue equivalence and further studied so that this detecting element shows such RPL properties as to allow a dose to be measured multiple times. Consequently, the present inventors have found that a detecting element containing magnesium oxide shows excellent RPL properties and completed the present invention.

That is, the dosimeter of the present invention comprises a detecting element containing magnesium oxide and a dose measuring system thereof is a radio-photoluminescence system.

The detecting element preferably comprises a single-crystal body or a sintered body of magnesium oxide, and more preferably further contains a rare-earth element such as samarium.

Moreover, the radiation measuring method of the present invention uses the detecting element and a dose measuring system thereof is a radio-photoluminescence system.

### Effect of the Invention

The dosimeter of the present invention uses magnesium oxide, the atomic number of which is small, as a material of a detecting element and thus is excellent in biological tissue equivalence. Moreover, the dose measuring system is a radio-photoluminescence system, and thus a dose can be read out multiple times.

Therefore, the dosimeter of the present invention can be suitably used for various purposes such as a personal dosimeter, a dosimeter for environmental monitoring and a medical dosimeter.

### Brief Description of the Drawings

Fig. 1 is a radio-photoluminescence (RPL) spectrum of a magnesium oxide sintered body containing 0.2 mol% of samarium obtained in Example 1.
Fig. 2 is a graph showing RPL intensities with regard to radiation doses of magnesium oxides obtained in Examples 1 to 4.
Fig. 3 is a graph showing a fading of the magnesium oxide sintered body containing 0.2 mol% of samarium obtained in Example 1.
Fig. 4 is an RPL spectrum of a magnesium oxide sintered body containing 0.02 mol% of samarium obtained in Example 2.
Fig. 5 is an RPL spectrum of a magnesium oxide sintered body obtained in Example 3.
Fig. 6 is an RPL spectrum of a magnesium oxide single-crystal body obtained in Example 4.

### Embodiment for Carrying Out the Invention

The dosimeter of the present invention is characterized in that it comprises a detecting element containing magnesium oxide and that a dose measuring system is a radio-photoluminescence system. This magnesium oxide is irradiated with radiation such as α-rays, β-rays, γ-rays, x-rays or neutrons and subsequently optically stimulated in an appropriate manner, thereby emitting fluorescence called an RPL. Moreover, since the intensity of this RPL is proportional to the dose of the emitted radiation, the magnesium oxide can be suitably used as a detecting element of a dosimeter for measuring an exposure dose of radiation.

The dose measuring system of the dosimeter of the present invention is an RPL system, thereby exerting a remarkably excellent effect in which a recorded dose can be read out multiple times, which cannot be exerted by the publicly known TSL system or OSL system.

The detecting element preferably comprises a single-crystal body or a sintered body of magnesium oxide, and this single-crystal body or sintered body is used by being processed into a desired shape. The detecting element preferably has transparency in order to efficiently extract emitted RPL fluorescence to the outside.

The detecting element preferably contains a rare-earth element. By containing the rare-earth element, the RPL intensity is increased and the accuracy of radiation detection of the detecting element can be improved.

The amount of the rare-earth element to be added is not particularly limited but is preferably equal to or more than 0.001 mol% and particularly preferably equal to or more than 0.01 mol%. The maximum amount of the rare-earth element to be added is not particularly limited but is preferably equal to or less than 1 mol% and particularly preferably equal to or less than 0.5 mol%. When the amount of the rare-earth element to be added is within the above range, the transparency of the sintered body is increased and also the RPL intensity can be increased.

The rare-earth element is preferably at least one element selected from cerium, praseodymium, neodymium, samarium, europium, gadolinium, terbium, dysprosium, holmium, erbium, thulium and ytterbium and particularly preferably contains samarium. Of the rare-earth elements, the addition of samarium can further increase the RPL intensity.

A method for obtaining the above single-crystal body of magnesium oxide is not particularly limited, and the single-crystal body may be grown by a publicly known electromelting method (see for example Japanese Patent No. 4686181) or other methods.

A method for obtaining the above sintered body of magnesium oxide is not particularly limited, either, and a publicly known method for manufacturing a sintered body can be adopted. Preferably, a spark plasma sintering method (SPS method) or other methods are used. In the SPS method, for example, after magnesium oxide powder, which is a raw material, is charged into a graphite die and compressed by a punch, it is set in an SPS furnace capable of performing evacuation, pressurization and pulse energization. Next, the SPS furnace is evacuated, and subsequently, by pulse energization, the magnesium oxide powder is sintered, being pressurized in a range of preferably 1 to 1000 MPa and more preferably in a range of 10 to 100 MPa and heated in a range of preferably 1000 to 2000°C and more preferably in a range of 1200 to 1800°C. When a small sintered body having a size of several mm to approximately 100 mm is manufactured, the heating time is preferably several minutes to one hour, and when a large sintered body having a size of more than 100 mm is manufactured, the heating time is preferably one to three hours. The purity of the magnesium oxide used as a raw material is preferably equal to or more than 99.9% by mass and more preferably equal to or more than 99.99% by mass.

When a rare-earth element is added, magnesium oxide powder and rare-earth oxide powder are prepared to have a predetermined composition and subsequently well mixed by means of a publicly known mixer such as an agate mortar and a ball mill. The purity of the rare-earth oxide powder used as a raw material is preferably equal to or more than 99.9% by mass and more preferably equal to or more than 99.99% by mass. Then, by the above method for obtaining the single-crystal body or the sintered body, a magnesium oxide detecting element containing the rare-earth element can be manufactured.

When a single-crystal body of magnesium oxide is used as the above detecting element, because of the high melting point of magnesium oxide, the processing is required to be performed at a very high temperature at the time of manufacturing the single-crystal body, which however allows a homogeneous detecting element to be obtained. In contrast, when a sintered body of the magnesium oxide is used as the above detecting element, the processing can be performed at a relatively low temperature at the time of manufacturing the sintered body, but the homogeneity is less than that of the single-crystal body in most cases. Whether the single-crystal body or the sintered body is selected is determined from the costs and performance of the detecting element.

The resultant single-crystal body or sintered body of magnesium oxide is processed into a flat-plate shape having a circular surface with a diameter of several mm to several tens of mm or a rectangular surface with a side length of several mm to several tens of mm and having a thickness of about several hundreds of µm to several mm, so that it can be used as a detecting element of a dosimeter. The single-crystal body or sintered body of magnesium oxide has favorable processability and is easily used by being processed into a desired shape. For the processing, a publicly known cutting machine, such as a blade saw and a wire saw, a grinding machine or a polishing machine can be used without any limitation.

As a configuration of the dosimeter of the present invention, a publicly known configuration can be adopted. Specifically, included is a configuration in which a detecting element made of magnesium oxide, which has been processed into the flat-plate shape, is housed in a plastic case. It is also possible to suitably adopt a configuration in which a plurality of detecting elements is housed in a case and partially covered with a radiation filter made of acrylic, aluminum, copper, tin, or other materials, thereby allowing radiation energy to be estimated.

According to the present invention, a radiation dose measuring method using the above dosimeter is provided. Specifically, after the dosimeter having the above configuration is mounted or placed on a test object for a predetermined measurement period, light stimulation by an ultraviolet pulsed laser or the like is provided to the detecting element of the dosimeter, and the intensity of an RPL emitted from this detecting element is measured, thereby enabling a measurement of a dose of radiation with which the test object has been irradiated during the above measurement period.

### Examples

A detailed description will be provided below in conjunction with examples of the present invention, but the present invention is not limited to these examples. Moreover, not all of the combinations of features described in the examples are necessary for the solving means of the present invention.

### [Example 1]

### (Manufacture of Detecting Element)

Magnesium oxide powder and samarium oxide powder having a purity of 99.99% by mass were used, and 5.0 g of magnesium oxide powder and 0.043 g of samarium oxide powder were well mixed to be homogeneous by an agate mortar such that the amount of samarium to be added became 0.2 mol%. The mixed powder of 0.5 g was charged into a graphite die having a diameter of 10 mm and set in an SPS furnace capable of performing pressurization, evacuation and pulse energization. The SPS furnace was evacuated to approximately -0.1 MPaG and subsequently the temperature was increased to 1500°C at a rate of approximately 17°C/min due to a self-heating action by means of pulse energization, and the heating continued for 60 minutes. The pressure applied to the sintered body during the heating was approximately 75 MPa. After the heating, the furnace was cooled down to a room temperature at a rate of approximately 200°C/min, and a magnesium oxide sintered body having a disc shape with a diameter of 10 mm was obtained. This sintered body was processed, and a detecting element was obtained, which comprised the magnesium oxide sintered body having a disc shape with a thickness of 1 mm. In addition, the 10-mm-diameter surface of this detecting element was mirror polished.

### (Measurement of RPL Spectrum of the Detecting Element)

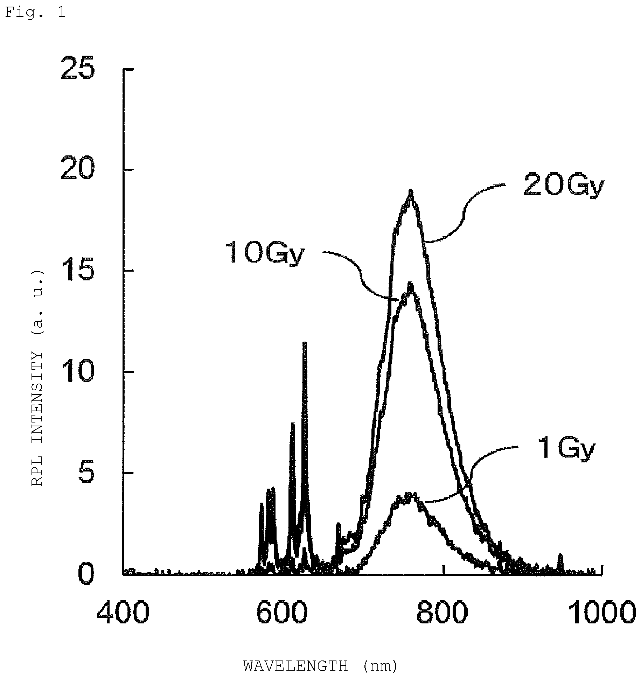

An x-ray tube having a tungsten cathode was operated at a tube voltage of 40 keV and at a tube current of 5 mA, and the detecting element was irradiated with x-rays emitted from this x-ray tube. Here, the detecting element was irradiated at a dose rate of 1 Gy/min (air kerma) for one minute, so that the radiation dose of the detecting element became 1 Gy. The detecting element which has been irradiated with the x-rays was irradiated with ultraviolet rays of 340 nm, and an RPL spectrum emitted from this detecting element was measured. Fig. 1 shows a difference spectrum with respect to an emission spectrum having similarly been measured in advance before the x-ray irradiation. Fig. 1 also shows RPL spectrums obtained when the irradiation times were 10 and 20 minutes in the similar manner and thus the radiation doses emitted on the detecting elements became 10 Gy and 20 Gy, respectively. It is understood from Fig. 1 that the magnesium oxide sintered body to which 0.2 mol% of samarium has been added is useful as the detecting element of the dosimeter since it shows a high-intensity RPL by the radiation irradiation.

### (Evaluation of Linearity of RPL Intensity to Radiation Dose)

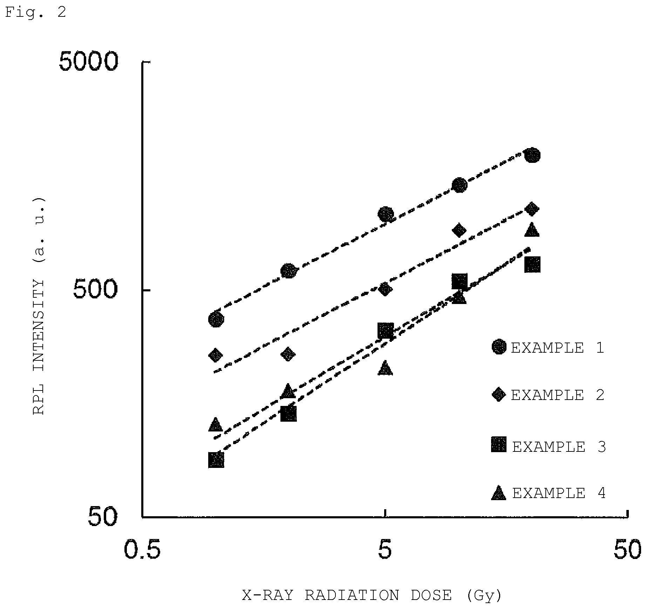

Under the above x-ray irradiation conditions, the detecting elements were irradiated for 1, 2, 5, 10 and 20 minutes, so that the total radiation doses became 1, 2, 5, 10 and 20 Gy, respectively. The RPL spectrums were measured in the manner similar to the above, and the linearity of the RPL intensity to the radiation dose was evaluated from the integrated value of the RPL intensity from a wavelength of 400 to 990 nm. Fig. 2 shows the obtained results. It is understood from Fig. 2 that the detecting element comprising the magnesium oxide sintered body to which 0.2 mol% of samarium has been added allows radiation to be measured highly precisely since the linearity of the RPL intensity to the radiation dose is excellent.

### (Evaluation of Fading)

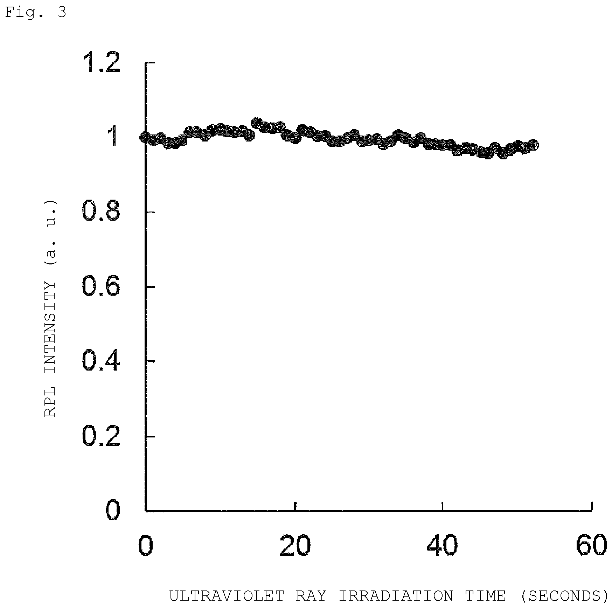

The RPL spectrum of the resultant detecting element was repeatedly measured, and fading by ultraviolet ray irradiation at the time of measurement was evaluated. Fig. 3 shows the results. It is understood from Fig. 3 that the repeated irradiation with ultraviolet rays does not deteriorate the RPL intensity and that repetitive measurement is possible.

### [Example 2]

### (Manufacture of Detecting Element)

Magnesium oxide powder of 5.0 g and samarium oxide powder of 0.004 g were well mixed to be homogeneous by an agate mortar such that the amount of samarium to be added became 0.02 mol%. The mixed powder of 0.5 g was charged into a graphite die having a diameter of 10 mm and pressurized. Subsequently, a detecting element was manufactured in the manner similar to that of Example 1 and the physical properties were measured.

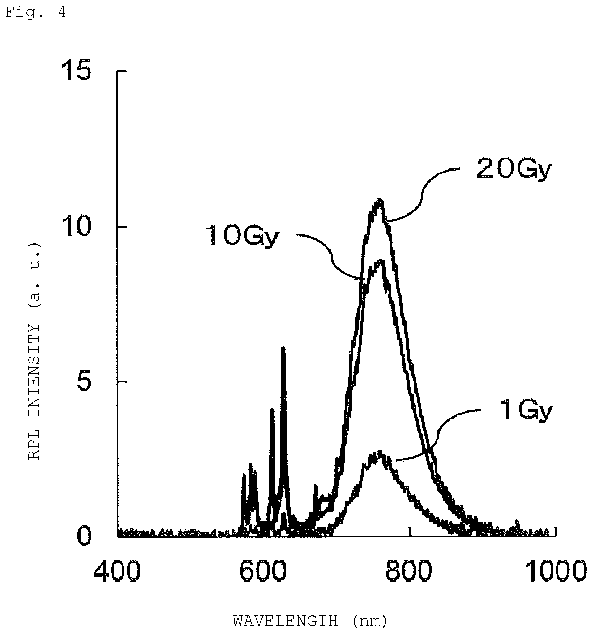

Fig. 4 shows the RPL spectrum of the resultant detecting element. It is understood from Fig. 4 that the magnesium oxide sintered body to which 0.02 mol% of samarium has been added is useful as the detecting element of the dosimeter since it shows a high-intensity RPL by radiation irradiation. Next, the linearity of the RPL intensity to the radiation dose was evaluated. Fig. 2 shows the results. It is understood from Fig. 2 that the linearity of the RPL intensity to the radiation dose is excellent. Moreover, when fading was also evaluated, similar to Example 1, a deterioration in the RPL intensity by repeated irradiation with ultraviolet rays was not observed.

### [Example 3]

### (Manufacture of Detecting Element)

Magnesium oxide powder of 0.5 g was charged into a graphite die having a diameter of 10 mm and pressurized. Subsequently, a detecting element was manufactured in the manner similar to that of Example 1 and the physical properties were measured.

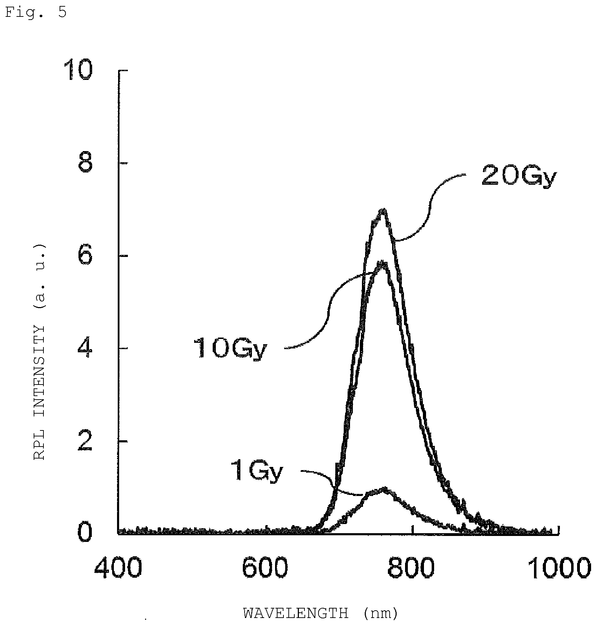

Fig. 5 shows the RPL spectrum of the resultant detecting element. It is understood from Fig. 5 that the magnesium oxide sintered body is useful as the detecting element of the dosimeter since it shows a high-intensity RPL by radiation irradiation. Next, the linearity of the RPL intensity to the radiation dose was evaluated. Fig. 2 shows the results. It is understood from Fig. 2 that the linearity of the RPL intensity to the radiation dose is excellent. Moreover, when fading was evaluated, similar to Example 1, a deterioration in the RPL intensity by repeated irradiation with ultraviolet rays was not observed.

### [Example 4]

### (Manufacture of Detecting Element)

A magnesium oxide single crystal grown by an electromelting method was processed into a shape having a 10-mm-square surface and having a thickness of 1 mm, and a detecting element for a dosimeter was obtained. The 10-mm-square surface of this detecting element was mirror polished. Steps subsequent to a measurement of the RPL spectrum of the detecting element were performed in the manner similar to that of Example 1.

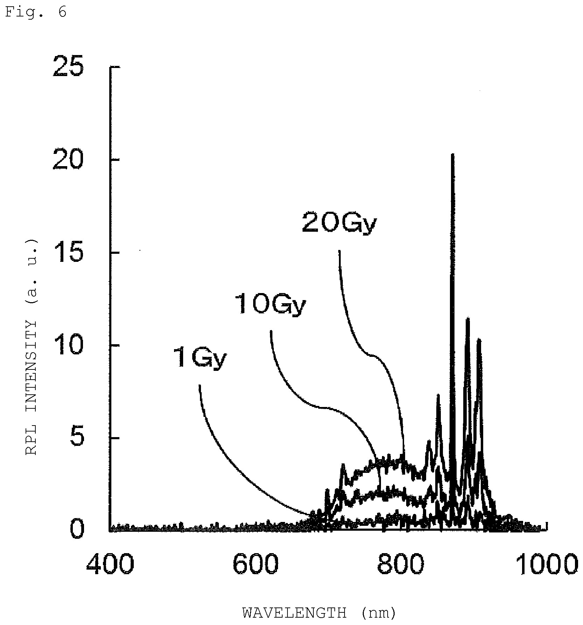

Fig. 6 shows the RPL spectrum of the resultant detecting element. It is understood from Fig. 6 that the magnesium oxide single-crystal body is useful as the detecting element of the dosimeter since it shows a high-intensity RPL by radiation irradiation. Next, the linearity of the RPL intensity to the radiation dose was evaluated. Fig. 2 shows the results. It is understood from Fig. 2 that the linearity of the RPL intensity to the radiation dose is excellent. Moreover, when fading was evaluated, similar to Example 1, a deterioration in the RPL intensity by repeated irradiation of ultraviolet rays was not observed.

## Claims

1. A dosimeter comprising a detecting element containing magnesium oxide, wherein a dose measuring system is a radio-photoluminescence system.

2. The dosimeter according to Claim 1, wherein the detecting element comprises a single-crystal body or a sintered body of magnesium oxide.

3. The dosimeter according to Claim 1 or 2, wherein the detecting element contains a rare-earth element.

4. The dosimeter according to Claim 3, wherein the rare-earth element includes samarium.

5. The dosimeter according to Claim 3 or 4, wherein a content of the rare-earth element in the detecting element is equal to or more than 0.001 mol% and equal to or less than 1 mol%.

6. A radiation dose measuring method using the dosimeter according to any one of Claims 1 to 5, wherein a dose measuring system is a radio-photoluminescence system.
